# EUROPÄISCHE PATENTSCHRIFT

(11) **EP 1 722 130 B1**
(45) Veröffentlichungstag und Bekanntmachung des Hinweises auf die Patenterteilung: **19.08.2009**
(21) Anmeldenummer: 05090137.0
(22) Anmeldetag: 13.05.2005
(51) Int. Cl.: F16H 55/30, F16H 7/06, F16G 13/12, B66F 9/08, B66D 3/00

(54) **Taschenkettenrad und Kettentrieb mit einem Taschenkettenrad**
Pocket wheel for a chain and chain drive comprising pocket wheel for chain
Roue comprenant des poches pour une chaîne et mécanisme de commande par chaîne avec roue comprenant des poches pour une chaîne

(43) Veröffentlichungstag der Anmeldung: 15.11.2006
(60) Teilanmeldung: 09006521.0
(73) Patentinhaber: RuD Ketten Rieger & Dietz GmbH u. Co. KG, 73432 Aalen (DE)
(72) Erfinder: Sinz, Rolf, 73540 Heubach (DE); Herzog, Heribert, 73432 Aalen-Ebnat (DE)
(74) Vertreter: Grünecker, Kinkeldey, Stockmair & Schwanhäusser Anwaltssozietät

(56) Entgegenhaltungen:
- DE-C1- 19 731 593
- NL-A- 7 904 559
- US-A- 662 768
- US-A- 5 533 938

## Beschreibung

Die Erfindung betrifft ein Taschenkettenrad für Kettentriebe von Hebezeugen und Hubwerken mit zwei neben- und versetzt zueinander angeordneten Gruppen von Taschen für das Rad gegenüber der Radachse unter einem Winkel α passierende Kettenglieder, bei dem die Taschen von jeweils einem Boden, einer Seitenwand und zwei, Zähne bildenden Querstegen begrenzt werden und bei dem der Abstand A, den die Seitenwände sich gegenüberliegender Taschen voneinander einnehmen, größer ist als die in Richtung der Achse des Rades gemessene Erstreckung a der Kettenglieder.

Ein Taschenkettenrad der vorstehenden Art ist aus der DE 44 06 623 C1 bekannt. Bei dem bekannten Kettenrad stützen sich die Kettenglieder mit ihren achsnahen Schenkeln an Teilen des Bodens und mit ihren achsfernen Schenkeln auf letzteren zugewandten Flächen der die Zähne des Rades bildenden Querstege ab, wobei durch diese Art der doppelten Abstützung ein Winkel α definiert wird, dessen Größe von der Gesamtzahl der Taschen des Kettenrades abhängt. Als vorteilhaft wird darüber hinaus eine zusätzliche Abstützung der Kettenglieder an den Seitenwänden der Taschen erachtet. Anders ausgedrückt bedeutet dies, dass bei dem bekannten Kettenrad die Größe des Winkels α durch die Abmessungen des Kettenrades bestimmt wird, wie dies auch bei anderen einschlägigen, z. B. aus der US 3 415 134 A bekannten Taschenkettenrädem der Fall ist.

Aus der gattungsgemäßen US 5,533,938 A ist ein Taschenkettenrad beschrieben, dessen Taschenböden mit einer Schräge derart ausgeformt sind, dass sich die der Radachse zugewandten Schenkel der Kettenglieder lediglich in den gekrümmten Bereichen des Überganges ihrer Buge abstützen, wobei die achsfernern Schenkel der Kettenglieder eine zusätzliche Abstützung durch die Auflageflächen der Stege erfahren.

Wie im Rahmen von Untersuchungen festgestellt wurde, kann davon ausgegangen werden, dass die Belastungen der Kettenglieder beim Passieren des Taschenkettenrades nach der DE 44 06 623 C1 geringer sind als beim Passieren von Kettenrädern nach der US 3 415 135 A, wobei der Grund hierfür darin liegen dürfte, dass die Böden der Taschen des Rades nach der DE 44 06 623 C1 im Wesentlichen parallel und die Seitenwände der Taschen dieses Rades im Wesentlichen senkrecht zur Achse des Rades verlaufen, so dass den Kettengliedern hier, im Gegensatz zu den Verhältnissen bei dem Kettenrad nach der US 3 415 135 A, ein gewisser Bewegungsspielraum zur Verfügung steht. Wie sich indes gezeigt hat, lassen sich die Belastungen der Kettenglieder noch weiter reduzieren, wenn man anders als bei den bisher bekannten Lösungen den Winkel α, den die Kettenglieder während des Laufes über das Kettenrad einnehmen, nicht durch die Form des Kettenrades vorgibt, sondern wenn der Winkel α bei vorgegebener Zähnezahl des Rades einzig und allein vom Materialdurchmesser d und der inneren Breite bᵢ der Kettenglieder abhängt, indem sichergestellt ist, dass die Höhe H der die Zähne des Rades bildenden Querstege hinreichend klein ist, um einen Kontakt zwischen den achsfernen Längsschenkeln der Kettenglieder und den ihnen zugewandten Flächen der Köpfe der von den Querstegen gebildeten Zähne zu verhindern und dass die Seitenwände der Taschen lediglich dazu dienen, eventuelle Bewegungen der Kettenglieder parallel zur Radachse zu begrenzen.

In der Praxis bedeutet dies, dass die Kettenglieder beim Passieren des erfindungsgemäßen Kettenrades eine ihnen gewissermaßen "von Haus aus angenehme" Winkellage einnehmen und sie keinen aus einer vorgegebenen Zwangslage resultierenden Zusatzbelastungen ausgesetzt sind. Die Kontaktzonen, über die beim erfindungsgemäßen Kettenrad Kräfte zwischen dem Kettenrad und den Kettengliedern der das Kettenrad passierenden Kette übertragen werden, beschränken sich auf die Zahnflanken der die Zähne bildenden Querstege und die gegen diese Zahnflanken anliegenden bogenförmigen Abschnitte der Kettenglieder, wobei den Seitenwänden der Taschen lediglich die Aufgabe zukommt, die Bewegungen des Kettenstranges in Richtung der Radachse in Grenzen zu halten, ohne eine echte Stützfunktion zu übernehmen. Durch die den Kettengliedern eingeräumte Bewegungsfreiheit wird das Entstehen kritischer Spannungen verhindert.

Gegenstand der Erfindung ist außerdem ein mit einem erfindungsgemäßen Taschenkettenrad ausgestatteter Kettentrieb für ein Hebezeug oder ein Hubwerk, bei dem der Last- und der Losseite des das Taschenkettenrad passierenden Kettenstranges schwenkbare Führungselemente zugeordnet sind, deren Schwenkachsen und die Achse des Kettenrades in jeweils einer Ebene liegen, die senkrecht zur Längsachse des ein- bzw. auslaufenden Kettenstranges steht. Aufgabe der Führungselemente ist es, die Kettenglieder des jeweiligen Kettenstranges vor dem Eintritt in das Taschenkettenrad im Sinne einer Reduzierung unkontrollierter Bewegungen zu stabilisieren und einen sicheren Einlauf des Kettenstranges in das Taschenkettenrad zu gewährleisten.

Weiter Merkmale und Einzelheiten der Erfindung ergeben sich aus den Unteransprüchen und der nachstehen Beschreibung einer in den beigefügten Zeichnungen dargestellten Erfindung. Es zeigen:

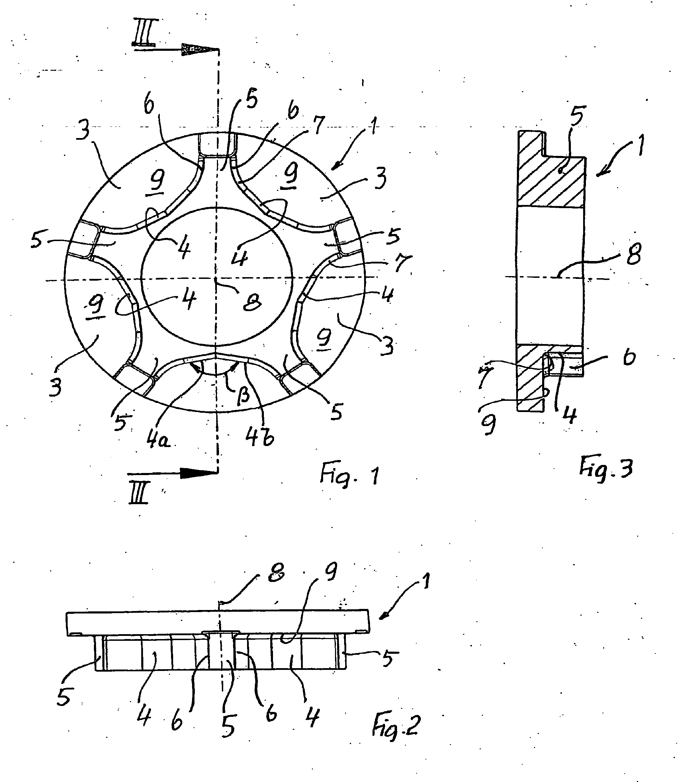

- Fig. 1: die Vorderansicht der Taschen einer Radhälfte eines zweiteiligen Taschenkettenrades,
- Fig. 2: die Draufsicht auf die Radhälfte gemäß Fig. 1,
- Fig. 3: einen Schnitt längs der Linie III - III in Fig. 1,

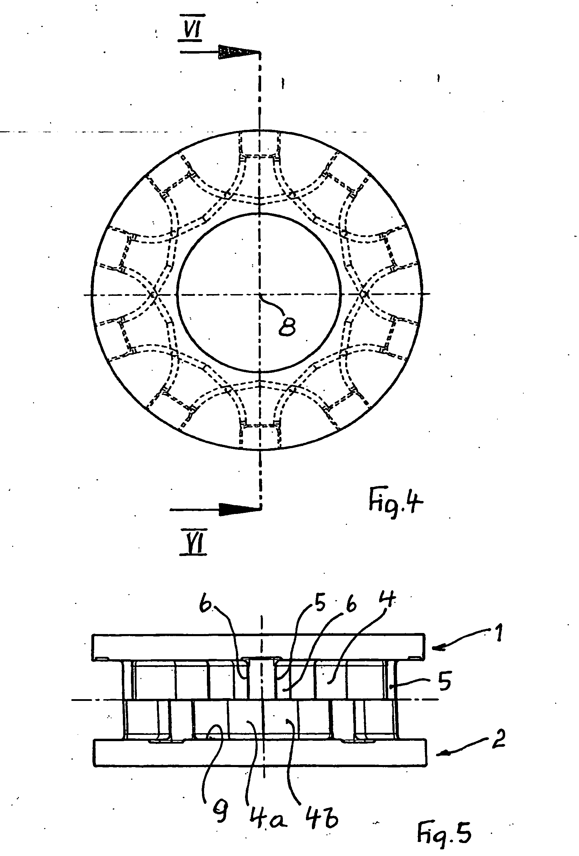

- Fig. 4: die Vorderansicht des aus zwei Teilen gemäß Fig. 1 bis 3 bestehenden Taschenkettenrades,
- Fig. 5: die Draufsicht auf das Taschenkettenrad gemäß Fig. 4,
- Fig. 6: einen Schnitt durch ein Taschenkettenrad für eine Kette, deren Glieder eine innere Breite bᵢ von 1,1 d aufweisen,
- Fig. 7: einen Schnitt durch ein Taschenkettenrad für eine Kette, deren Glieder eine innere Breite bᵢ von 1,15 d aufweisen,
- Fig. 8: einen Schnitt durch ein Taschenkettenrad für eine Kette, deren Glieder eine innere Breite bᵢ von 1,25 d aufweisen,
- Fig. 9: einen Schnitt durch ein Taschenkettenrad für eine Kette, deren Glieder eine innere Breite bᵢ von 1,3 d aufweisen,
- Fig. 10: die Vorderansicht von Teilen eines mit einer Rundstahlkette bestückten Kettentriebes mit einem Taschenkettenrad gemäß den Figuren 1 bis 9,
- Fig. 11: die Draufsicht auf die Teile des Kettentriebes gemäß Fig. 10,
- Fig. 12: die Vorderansicht von Teilen eines modifizierten Kettentriebes,
- Fig. 13: die Vorderansicht von Teilen eines mit einer D-Profilkette bestückten Kettentriebes mit einem Taschenkettenrad gemäß den Figuren 1 bis 9 und
- Fig. 14: die Draufsicht auf die Teile des Kettentriebes gemäß Fig. 13.

In den Figuren sind 1 und 2 die beiden lösbar oder unlösbar miteinander verbindbaren Hälften eines Taschenkettenrades. Jede der beiden Hälften bildet fünf Taschen 3, deren Böden 4 gerade Abschnitte 4a und 4b aufweisen, die einen Winkel β von etwa 160° einschließen, um eine Berührung zwischen den Schweißwulsten der Kettenglieder und den Böden 4 zu verhindern.

Die jeweils aufeinander folgenden Taschen 3 der in Radumfangsrichtung zueinander versetzt angeordneten Taschenreihen sind durch Zähne 5 mit zur Kraftübertragung auf die Kettenglieder eines Kettenstranges dienenden Flanken 6 voneinander getrennt. Die Böden 4 der Taschen 3 und die Flanken 6 der Zähne 5 verlaufen abgesehen von einer zur Vermeidung von Kerbspannungen vorgesehenen kleinen Übergangszone 7 parallel zur Achse 8 des Taschenkettenrades, während die Seitenwände 9 der Taschen 3 senkrecht zur Achse 8 orientiert sind. Der Radius der Übergangszonen sollte in jedem Fall kleiner als der halbe Durchmesser d der Glieder der Kette sein, wobei d im Falle der Verwendung von Rundstahlgliedern der Schenkeldurchmesser und im Falle von D-Profil-Gliedern der in den Querschnitt des D-Profiles einbeschriebene Durchmesser der Glieder ist. In der Praxis liegt der Krümmungsradius in der Größenordnung von 0,1 d bis 0,4 d, so dass eine Berührung zwischen den Gliedern der Ketten und den Übergangszonen ausgeschlossen ist.

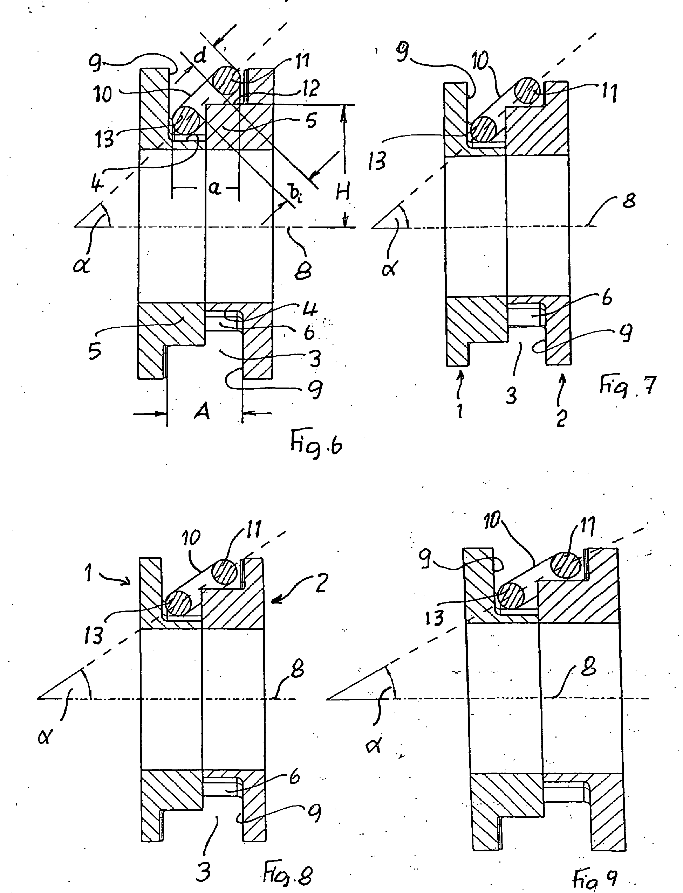

In den Figuren 6 bis 9 ist beispielhaft jeweils anhand eines einzelnen Kettengliedes 10 mit einem Durchmesser d angedeutet, welchen Winkel α die Glieder einer Kette beim Passieren des Taschenkettenrades in Abhängigkeit von ihrem Materialdurchmesser d und von ihrer inneren Breite bᵢ einnehmen. So beträgt der Winkel α im Falle der Figur 6 für eine Kette mit Kettengliedern, deren innere Breite bᵢ = 1,1 d beträgt, ca. 45°, während er für Kettenglieder mit inneren Breiten von bᵢ = 1,15 d (Fig. 7), bᵢ = 1,25 d (Fig. 8) und bᵢ = 1,3 d (Fig. 9) Werte von ca. 41° (Fig. 7), ca. 35° (Fig. 8) und ca. 30° (Fig. 9) einnimmt. Wie die Figuren 6 bis 9 erkennen lassen, hängt die Schräglage der Kettenglieder bei vorgegebenem Materialdurchmesser d und vorgegebener Zähnezahl des Rades einzig und allein von deren innerer Breite bᵢ der Kettenglieder ab, d. h. sie wird im Gegensatz zur bisher üblichen Praxis nicht von den Abmessungen des Taschenkettenrades, sondern von den Anlageverhältnissen in den Bugen bzw. Gliedbögen der miteinander verbundenen Kettenglieder bestimmt. Unter normalen Bedingungen kann davon ausgegangen werden, dass die achsfernen Längsschenkel 11 der Kettenglieder 10 nicht nur keinen Kontakt mit den ihnen zugewandten Flächen 12 der Köpfe der Zähne 5 haben, sondern dass darüber hinaus auch keine Berührung zwischen den sich gegenüberliegenden Seitenwänden 9 der Taschen 3 einerseits und sowohl den achsfernen Längsschenkeln 11 als auch den achsnahen Längsschenkeln 13 der Kettenglieder 10 andererseits stattfindet. Der Abstand A der sich gegenüberliegenden Seitenwände 9 ist mit anderen Worten größer als die in Richtung der Achse 8 gemessene äußere Breite a der Kettenglieder 10. In der Praxis sollte A größer als 1,1 a sein.

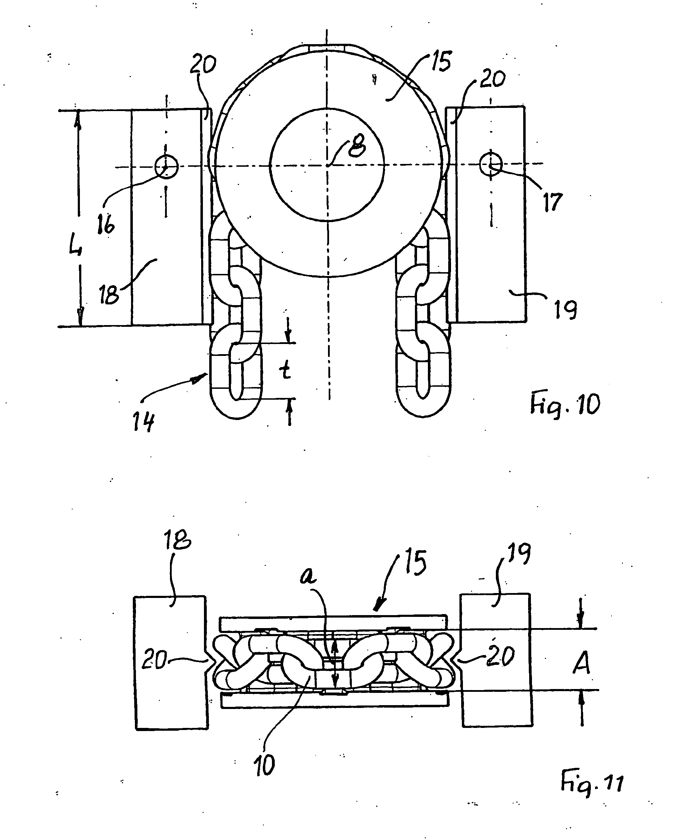

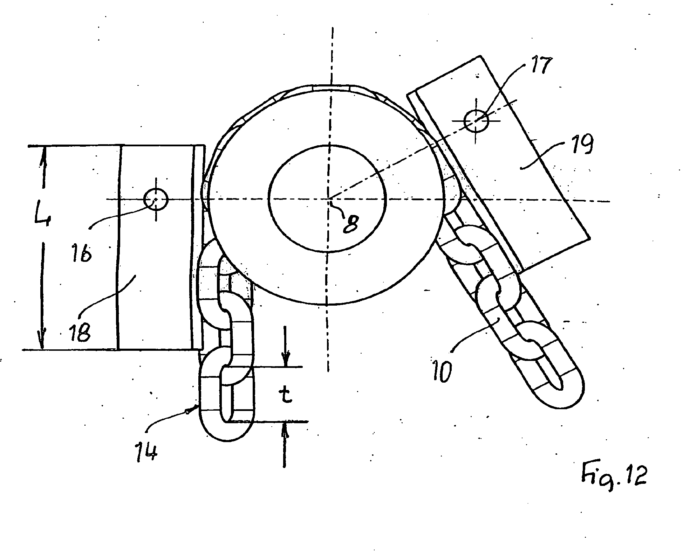

In den Figuren 10 und 11 ist ein von einem Kettenstrang 14 aus Rundstahlgliedern 10 umschlungenes Taschenkettenrad 15 der zuvor beschriebenen Art gezeigt, das einen Teil eines Kettentriebes für ein Hebezeug oder ein Hubwerk bildet. Der Last- und Losseite des Kettenstranges 14 sind zwei um Schwenkachsen 16 und 17 drehbare Führungselemente 18 und 19 zugeordnet, die beide Führungsstege 20 aufweisen, die das Ein- und Auslaufverhalten des Kettenstranges positiv beeinflussen und darüber hinaus, wie an sich bekannt, einem Aufsteigen beim Einlaufen entgegenwirken. Wie der Fig. 10 entnehmbar ist, liegen die Schwenkachsen 16, 17 und die Achse 8 in einer senkrecht zur Blattebene verlaufenden gemeinsamen Ebene. Bei einem schrägen Einlauf des Kettenstranges 14 handelt es sich dabei nicht um eine gemeinsame Ebene für alle drei Achsen 8, 16 und 17, sondern um jeweils eine gemeinsame Ebene der Achsen 16 und 8 bzw. 17 und 8, wie dies der Fig. 12 entnommen werden kann.

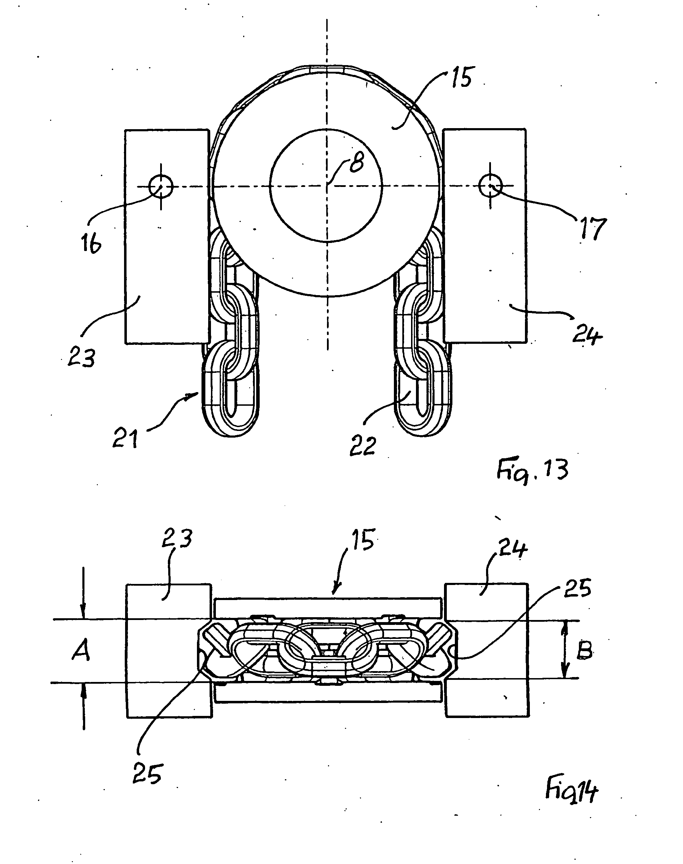

Aufgrund der nicht an die Form der Kettenglieder 10 angepassten Taschen 3 des neuen Kettenrades ist der Austausch eines Kettenstranges 14 aus Rundstahlgliedern 10 gegen einen Kettenstrang 21 aus D-Profilgliedern 22 problemlos möglich. Insbesondere bei Verwendung eines Kettenstranges 21 aus D-Profilgliedern 22 erweist es sich als zweckmäßig - wie in den Figuren 13 und 14 dargestellt - die Führungselemente 18 und 19 durch Führungselemente 23, 24 zu ersetzen, bei denen statt eines Führungssteges 20 eine Führungsnut 25 vorgesehen ist. Die maximale Breite B der Führungsnut 25 ist dabei bewusst kleiner als der Abstand A zwischen den Seitenwänden 9 der Taschen 3 gewählt, um wie im Falle der Lösung gemäß den Figuren 10 bis 12 einen zentrischen Einlauf der Kettenglieder 22 in das Taschenkettenrad 15 zu gewährleisten.

Grundsätzlich ist auch ein Verzicht auf Führungsstege und Führungsnuten möglich. Auch in diesem Fall verhindern die Seitenwände 9 der Taschen 3 parallel zur Radachse 8 verlaufende, seitliche Wanderbewegungen des das Rad passierenden Kettenstranges, ohne die Kettenglieder in ein vom Kettenrad vorgegebenes "Winkelkorsett" zu zwingen.

## Patentansprüche

1. Taschenkettenrad für Kettentriebe von Hebezeugen und Hubwerken mit zwei neben- und versetzt zueinander angeordneten Gruppen von Taschen (3) für das Rad gegenüber der Radachse (8) unter einem Winkel α passierende Kettenglieder (10; 22), bei dem die Taschen (3) von jeweils einem Boden (4), einer Seitenwand (9) und zwei, Zähne (5) bildenden Querstegen begrenzt werden und bei dem der Abstand A, den die Seitenwände (9) sich gegenüberliegender Taschen (3) voneinander einnehmen, größer ist als die in der Richtung der Achse (8) des Rades gemessene Erstreckung a der Kettenglieder (10; 22), **dadurch gekennzeichnet, dass** der Winkel α bei vorgegebener Zähnezahl des Rades einzig und allein vom Materialdurchmesser d der Kettenglieder und der inneren Breite bᵢ der Kettenglieder (10; 22) abhängt, indem sichergestellt ist, dass die Höhe H der die Zähne (5) des Rades bildenden Querstege hinreichend klein ist, um einen Kontakt zwischen den achsfernen Längsschenkeln (11) der Kettenglieder (10; 22) und den ihnen zugewandten Flächen (12) der köpfe der von den Querstegen gebildeten Zähne (5) zu verhindern und dass die Seitenwände (9) der Taschen (3) lediglich dazu dienen, eventuelle Bewegungen der Kettenglieder (10; 22) parallel zur Radachse (8) zu begrenzen.

2. Taschenkettenrad nach Anspruch 1, **dadurch gekennzeichnet, dass** der Abstand (A), den die Seitenwände (9) sich gegenüberliegender Taschen (3) voneinander einnehmen, größer als die 1,1-fache in Richtung der Achse (8) des Rades gemessene Erstreckung (a) der Kettenglieder (10; 22) ist.

3. Taschenkettenrad nach Anspruch 1 oder 2, **dadurch gekennzeichnet, dass** die Böden (4) der Taschen (3) zwecks Vermeidung eines Kontaktes zwischen ihnen und den ihnen zugewandten achsnahen Längsschenkeln (13) der Kettenglieder (10; 22) aus zwei, einen stumpfen Winkel β zueinander einschließenden Abschnitten (4a, 4b) bestehen, deren einander abgewandte Enden in die Flanken (6) der Zähne des Rades übergehen.

4. Taschenkettenrad nach einem der Ansprüche 1 bis 3, **dadurch gekennzeichnet, dass** die Böden (4) der Taschen (3) parallel zur Achse (8) und die Seitenwände (9) der Taschen (3) senkrecht zur Achse (8) des Rades verlaufen.

5. Taschenkettenrad nach Anspruch 4, **dadurch gekennzeichnet, dass** die Flanken (6) der Zähne (5) und die Böden (4) der Taschen (3) über gekrümmte Zonen (7) mit einem Radius in die Seitenwände (9) der Taschen (3) übergehen, der hinreichend klein ist, um eine Berührung zwischen diesen Zonen (7) und den Kettengliedern (10; 22) auszuschließen.

6. Taschenkettenrad nach einem der Ansprüche 1 bis 5, **dadurch gekennzeichnet, dass** die Übergangszonen (7) zwischen den Flanken (6) der Zähne (5) sowie den Böden (4) der Taschen (3) einerseits und deren Seitenwänden (9) andererseits einen Radius von maximal 0,4 d haben.

## Claims

1. A pocket-type chain wheel for chain drives of hoisting devices and lifting apparatuses, comprising two groups of pockets (3) for chain links (10; 22) which pass through the wheel at an angle α relative to the wheel axis (8), said groups of pockets (3) being disposed next to and offset from each other, in which chain wheel the pockets (3) are each defined by a bottom (4), a side wall (9), and two teeth (5)-forming transverse webs, and in which the distance A between the side walls (9) of opposing pockets (3) is greater than the extension a of the chain links (10; 22) measured in the direction of the axis (8) of the wheel, **characterized in that** the angle α at a given number of teeth of the wheel depends exclusively on the material diameter d of the chain links and the internal width bᵢ of the chain links (10; 22) **in that** it is ensured that the height H of the transverse webs forming the teeth (5) of the wheel is sufficiently small to prevent contact between the longitudinal legs (11) of the chain links (10; 22) which are remote from the axis and the areas (12) of the crests of the teeth (5) formed by the transverse webs, which areas (12) face the longitudinal legs, and that the side walls (9) of the pockets (3) just serve to limit possible movements of the chain links (10; 22) in parallel with the wheel axis (8).

2. The pocket-type chain wheel according to claim 1, **characterized in that** the distance (A) occupied by the side walls (9) of opposing pockets (3) is greater than 1.1 times the extension (a) of the chain links (10; 22) measured in the direction of the axis (8) of the wheel.

3. The pocket-type chain wheel according to claim 1 or 2, **characterized in that** the bottoms (4) of the pockets (3) for avoiding contact between them and the longitudinal legs (13) of the chain links (10; 22) which face the same and are near the axis consist of two sections (4a, 4b) which enclose an obtuse angle β with each other and whose ends facing away from each other pass into the flanks (6) of the teeth of the wheel.

4. The pocket-type chain wheel according to any one of claims 1 to 3, **characterized in that** the bottoms (4) of the pockets (3) extend in parallel with the axis (8) and the side walls (9) of the pockets (3) extend perpendicular to the axis (8) of the wheel.

5. The pocket-type chain wheel according to claim 4, **characterized in that** the flanks (6) of the teeth (5) and the bottoms (4) of the pockets (3) pass via curved zones (7) with a radius into the side walls (9) of the pockets (3), which radius is sufficiently small to exclude any contact between said zones (7) and the chain links (10; 22).

6. The pocket-type chain wheel according to any one of claims 1 to 5, **characterized in that** the transition zones (7) between the flanks (6) of the teeth (5) and the bottoms (4) of the pockets (3) on the one hand and the side walls (9) thereof on the other hand have a radius of not more than 0.4 d.

## Revendications

1. Roue pour chaîne, comprenant des poches, pour la transmission par chaîne d'engins de levage et de dispositifs de levage, comprenant deux groupes de poches (3), disposés côte à côte et de façon décalée l'un par rapport à l'autre, pour des éléments de chaîne (10 ; 22) associées à la roue en faisant avec l'axe de roue (8) un angle α, dans laquelle les poches (3) sont délimitées respectivement par un fond (4), une paroi latérale (9) et deux entretoises formant des dents (5), et dans laquelle la distance A entre les parois latérales (9) de poches (3) opposées les unes aux autres est supérieure à l'étendue a des éléments de chaîne (10 ; 22), mesurée dans la direction de l'axe (8) de la roue, **caractérisée en ce que** l'angle α dépend pour un nombre de dents prédéfini de la roue uniquement du diamètre de matériau d des éléments de chaîne et de la largeur intérieure bᵢ des éléments de chaîne (10 ; 22), **en ce qu'**il est assuré que la hauteur H des entretoises formant les dents (5) de la roue est suffisamment faible pour empêcher tout contact entre les branches longitudinales (11) éloignées de l'axe, des éléments de chaîne (10 ; 22) et les surfaces (12), tournées vers celles-ci, des têtes des dents (5) formées par les entretoises, et **en ce que** les parois latérales (9) des poches (3) servent uniquement à limiter d'éventuels mouvements des éléments de chaîne (10 ; 22) en parallèle à l'axe de roue (8).

2. Roue pour chaîne, comprenant des poches, selon la revendication 1, **caractérisée en ce que** l'écart (A) que prennent les parois latérales (9) de poches (3) opposées les unes aux autres est 1,1 fois supérieur à l'étendue (a) des éléments de chaîne (10 ; 22), mesurée en direction de l'axe (8) de la roue.

3. Roue pour chaîne, comprenant des poches, selon la revendication 1 ou 2, **caractérisée en ce que** les fonds (4) des poches (3), en vue d'éviter tout contact entre eux et les branches longitudinales (13) proches de l'axe et tournées vers ceux-ci des éléments de chaîne (10 ; 22), se composent de deux portions (4a, 4b) formant ensemble un angle obtus β et dont les extrémités éloignées les unes des autres se raccordent aux flancs (6) des dents de la roue.

4. Roue pour chaîne, comprenant des poches, selon l'une quelconque des revendications 1 à 3, **caractérisée en ce que** les fonds (4) des poches (3) s'étendent en parallèle à l'axe (8) et les parois latérales (9) des poches (3) s'étendent perpendiculairement à l'axe (8) de la roue.

5. Roue pour chaîne, comprenant des poches, selon la revendication 4, **caractérisée en ce que** les flancs (6) des dents (5) et les fonds (4) des poches (3) se raccordent aux parois latérales (9) des poches (3) par des zones courbes (7) ayant un rayon qui est suffisamment faible pour exclure tout contact entre lesdites zones (7) et les éléments de chaîne (10 ; 22).

6. Roue pour chaîne, comprenant des poches, selon l'une quelconque des revendications 1 à 5, **caractérisée en ce que** les zones de raccordement (7) entre les flancs (6) des dents (5) ainsi que les fonds (4) des poches (3) d'une part et leurs parois latérales (9) d'autre part ont un rayon d'un maximum de 0,4 d.
